# EUROPÄISCHE PATENTSCHRIFT

(11) **EP 1 234 126 B1**
(45) Veröffentlichungstag und Bekanntmachung des Hinweises auf die Patenterteilung: **28.05.2003**
(21) Anmeldenummer: 00989904.8
(22) Anmeldetag: 28.11.2000
(51) Int. Cl.: F16H 3/091

(54) **GETRIEBE**
GEARBOX
BOITE DE VITESSES

(30) Priorität: 02.12.1999 DE 19957985
(43) Veröffentlichungstag der Anmeldung: 28.08.2002
(73) Patentinhaber: ZF FRIEDRICHSHAFEN Aktiengesellschaft, 88038 Friedrichshafen (DE)
(72) Erfinder: SCHEPPERLE, Bernd, 78464 Konstanz (DE)
(86) Internationale Anmeldenummer: EP0011864
(87) Internationale Veröffentlichungsnummer: WO01040678

(56) Entgegenhaltungen:
- EP-A- 0 916 871
- DE-A- 4 226 576
- FR-A- 1 258 053
- FR-A- 2 178 502
- FR-A- 2 623 869

## Beschreibung

Die vorliegende Erfindung betrifft ein Getriebe nach dem Oberbegriff des Patentanspruches 1, wie es aus der EP-A-916 871 bekannt ist.

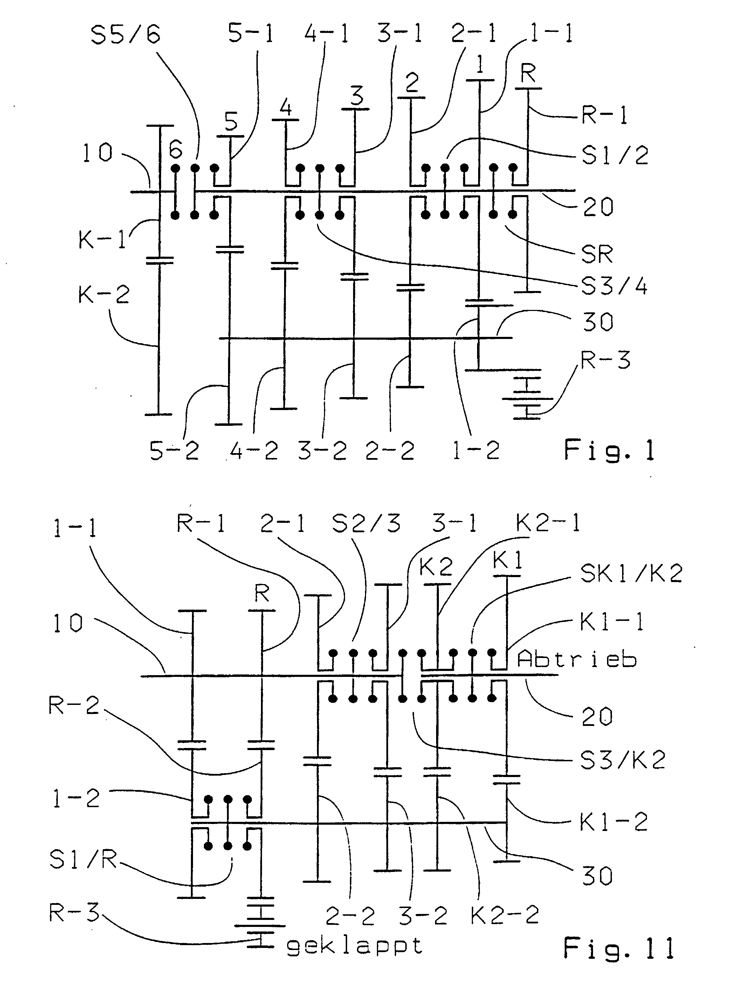

Für Nutzkraftwagen der mittleren Klasse bis ca. 30 t Gesamtgewicht und ca. 1 000 Nm Motordrehmoment werden vorzugsweise manuell geschaltete Sechs-Gang-Getriebe eingesetzt. Gemäß Fig. 1 umfaßt ein solches Sechs-Gang-Getriebe in Vorgelegewellenbauweise und progressiver Gangstufung eine Antriebswelle 10, eine Abtriebswelle 20 und eine Vorgelegewelle 30. Antriebsseitig ist ein die Drehung der Antriebswelle 10 auf die Vorgelegewelle 30 übertragendes Antriebskonstantradpaar K-1, K-2 vorgesehen. Auf der Abtriebswelle 20 befinden sich die Zahnräder 5-1, 4-1, 3-1, 2-1, 1-1 und R-1 als Losräder, die dem fünften Gang, dem vierten Gang, dem dritten Gang, dem zweiten Gang, dem ersten Gang bzw. dem Rückwärtsgang zugeordnet sind. Die entsprechenden Zahnräder 5-2, 4-2, 3-2, 2-2 und 1-2 sind drehfest auf der Vorgelegewelle 30 angeordnet. Das Zahnrad 1-2 ist sowohl dem ersten Gang, wie auch unter Zwischenschaltung eines Zwischenzahnrades R-3 dem Rückwärtsgang R zugeordnet. Auf der Abtriebswelle befinden sich die Synchronisierkupplungsglieder S1/2, S3/4, S5/6 und SR, wobei zum Schalten des fünften Ganges das Synchronisierkupplungsglied S5/6 in der Fig. 1 nach rechts, das Synchronisierkupplungsglied S3/4 zum Schalten des vierten Ganges nach links und zum Schalten des dritten Ganges nach rechts, das Synchronisierkupplungsglied S1/2 zum Schalten des zweiten Ganges nach links und zum Schalten des ersten Ganges nach rechts, das Synchronisierkupplungsglied SR zum Schalten des Rückwärtsganges nach rechts und zum Schalten des sechsten Ganges das Synchronisierkupplungsglied S5/6 zum direkten Verbinden der Antriebswelle 10 mit der Abtriebswelle 20 nach links betätigt werden.

Etwa 95 % aller Getriebe besitzen den Aufbau der Fig. 1. Probleme dieser Getriebe bestehen in den relativ großen Lagerspannweiten und den damit verbundenen Wellenbiegungen, die wiederum dazu führen, dass die Drehmomentübertragungsfähigkeit begrenzt ist. Getriebe dieser Art erfordern einen großen Achsabstand und sind damit relativ schwer und teuer. Wegen der großen zu synchronisierenden Massen müssen sehr große Schaltkräfte aufgebracht werden.

Es sind ferner Sechs-Gang-Getriebe bekannt, bei denen das Konstantradpaar auf der Abtriebsseite angeordnet ist. Probleme solcher Getriebe bestehen darin, dass dann, wenn die Abtriebswelle nicht koaxial zur Antriebswelle angeordnet ist, ein relativ großer Bauaufwand erforderlich ist. Wenn die Antriebswelle und die Abtriebswelle koaxial zueinander angeordnet sind, ergibt sich aber ein relativ großer Achsabstand zur Vorgelegewelle.

Die Aufgabe der vorliegenden Erfindung besteht darin, ein Getriebe so auszugestalten, dass die erforderlichen Handschaltkräfte stark reduziert, die Wellen kurz gebaut sind und der Bauaufwand klein ist.

Diese Aufgabe wird durch ein Getriebe mit den Merkmalen des Patentanspruches 1 gelöst.

Der wesentliche Vorteil des erfindungsgemäßen Getriebes besteht darin, dass durch die abtriebsseitige Anordnung von zwei Konstantradpaaren (Abtriebskonstantgruppe) das Getriebe in zwei Getriebeteile, nämlich in einen antriebsseitigen Getriebeteil und einen abtriebseitigen Getriebeteil unterteilt wird, wobei die Konstantradpaare des abtriebseitigen Getriebeteiles getrennt schaltbar sind. Dadurch stehen im abtriebseitigen Getriebeteil zwei Übersetzungen zur Wahl. Das Umschalten zwischen den Konstantradpaaren des abtriebseitigen Getriebeteiles erfolgt automatisch und fremdgesteuert an einem genau definierten Punkt beim Vorwählen des zu schaltenden Ganges. Durch das erfindungsgemäße Konzept wird vorteilhafterweise eine starke Reduzierung der Handschaltkräfte erreicht, weil nahezu alle rotierenden Massen mit dem Abtrieb verbunden sind und nicht mitsynchronisiert werden müssen. Vorteilhafterweise weist das erfindungsgemäße Getriebe eine geringere Anzahl von Radzügen als die bekannten Getriebe auf. Alle Synchronisierungen, die im Fahrbetrieb unter hoher Differenzdrehzahl geschaltet werden, insbesondere auch die des zweiten Ganges, befinden sich auf der Eingangswelle. Diese Anordnung ist für das Schaltkraftniveau am günstigsten. Vorteilhafterweise kann bei dem erfindungsgemäßen Getriebe ein Gang, vorzugsweise der höchste Gang als Direktgang ausgeführt werden. Dadurch wird der Wirkungsgrad gesteigert. Das erfindungsgemäße Getriebe ist vorteilhafterweise für eine hohe Drehmomentübertragung geeignet, weil seine Wellen kurz gebaut sind und daher auch hohe Belastungen bei nur geringen Verformungen ertragen. Vorteilhafterweise ist das vorliegende Getriebe zu einem Sieben-Gang-Getriebe erweiterungsfähig. Durch Realisierung einer Neutralstellung der Abtriebsgruppe kann die Vorgelegewelle durch Einkuppeln einer beliebigen Gangsynchronisierung ohne Zusatzaufwand als direkter Antrieb eines abtriebsseitigen Nebenabtriebes fungieren.

Vorteilhafte Ausgestaltungen der Erfindung gehen aus den Unteransprüchen hervor.

Im folgenden werden die Erfindung und deren Ausgestaltungen im Zusammenhang mit den Figuren näher erläutert.
Es zeigen:
- Fig. 1: in schematischer Darstellung ein bekanntes Sechs-Ganggetriebe mit einem antriebsseitigen Konstantradpaar;
- Fig. 2: eine erste Ausführungsform des erfindungsgemäßen Getriebes;
- Fig. 3: eine tabellarische Aufstellung der Übersetzungen und Gangsprünge der einzelnen Gänge des Getriebes gemäß der ersten Ausführungsform;
- Fig. 4: das Gang-Schaltbild des Getriebes gemäß der ersten Ausführungsform;
- Fig. 5: eine zweite Ausführungsform des erfindungsgemäßen Getriebes;
- Fig. 6: eine tabellarische Aufstellung der Übersetzungen und der Gangsprünge der einzelnen Gänge des Getriebes gemäß der zweiten Ausführungsform;
- Fig. 7: das Gang-Schaltbild des Getriebes gemäß der zweiten Ausführungsform;
- Fig. 8: eine dritte Ausführungsform des erfindungsgemäßen Getriebes;
- Fig. 9: eine tabellarische Aufstellung der den einzelnen Gängen der dritten Ausführungsform zugeordneten Übersetzungen und Gangsprünge;
- Fig. 10: das Gang-Schaltbild des Getriebes gemäß der dritten Ausführungsform und
- Fig. 11: eine vierte Ausführungsform des erfindungsgemäßen Getriebes.

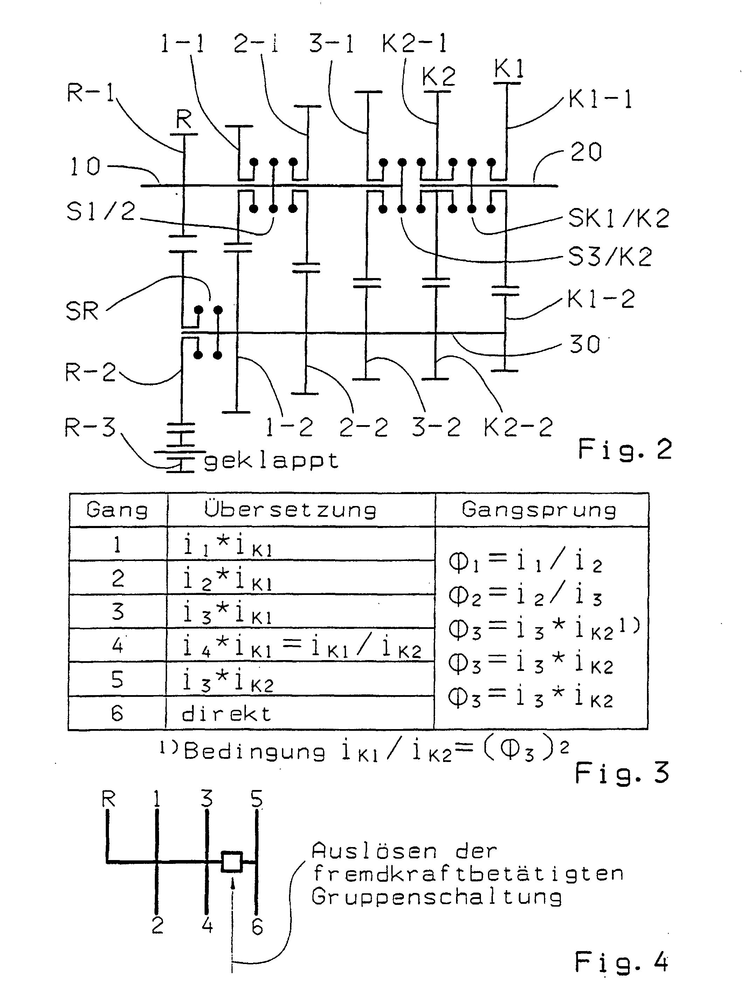

Im folgenden wird im Zusammenhang mit der Fig. 2 die erste Ausführungsform des vorliegenden Getriebes erläutert. Einzelheiten, die bereits im Zusammenhang mit der Fig. 1 erläutert wurden, sind in der entsprechenden Weise bezeichnet. Auf der Antriebswelle 10 befinden als Losräder das dem ersten Gang zugeordnete Zahnrad 1-1, das dem zweiten Gang zugeordnete Zahnrad 2-1 und das dem dritten und fünften Gang zugeordnete Zahnrad 3-1. Auf der Vorgelegewelle 3 befinden sich drehfest angeordnet die entsprechenden Zahnräder 1-2, 2-2 und 3-3. Vorzugsweise handelt es sich bei den genannten Zahnrädern um Stirnzahnräder. Die Gänge 1 und 2 werden durch Betätigen des Synchronisierkuppiungsgliedes S1/2 nach rechts bzw. nach links betätigt. Der dritte Gang wird durch Betätigen des Synchronisierkupplungsgliedes S3/K2 nach links betätigt. Beim Schalten des ersten, zweiten und dritten Ganges ist das Synchronisierkupplungsglied SK1/K2 nach rechts betätigt, sodass die Übertragung von der Vorgelegewelle 30 auf die Abtriebswelle 20 über das Konstantradpaar K1 erfolgt, das auf der Abtriebswelle 20 als Losrad das Zahnrad K1-1 und auf der Vorgelegewelle 30 drehfest das Zahnrad K1-2 aufweist.

Auf der Abtriebswelle 20 ist als Losrad das Zahnrad K2-1 eines zweiten Konstantradpaares K2 angeordnet, dessen weiteres Zahnrad K2-2 drehfest auf der Vorgelegewelle 30 befestigt ist. Bei den genannten Zahnrädern der Konstantradpaare K1 und K2 handelt es sich vorzugsweise ebenfalls um Stirnzahnräder.

Das Zahnrad K2-1 des Konstantradpaares K2 wird durch Betätigen des Synchronisierkupplungsgliedes S3/K2 nach rechts mit der Antriebswelle 1 verbunden und somit dem vierten Gang zugeordnet. Durch Betätigen des Synchronisierkupplungsgliedes SK1/K2 nach links wird das zweite Zahnrad K2-1 des zweiten Konstantradpaares K2 an die Abtriebswelle 20 gekoppelt. Der sechste Gang wird dadurch geschaltet, dass gleichzeitig das Synchronisierkupplungsglied S3/K2 nach rechts geschaltet und das Synchronisierkupplungsglied SK1/K2 nach links geschaltet werden. Die Übertragung von der Antriebswelle 10 auf die Abtriebswelle 20 erfolgt dann direkt über das Zahnrad K2-1 des zweiten Konstantradpaares K2.

Das Zahnrad R-1 des Rückwärtsganges R ist drehfest auf der Antriebswelle 10 angeordnet. Das entsprechende Zahnrad R-2, das vom Zahnrad R-1 über das Zwischenzahnrad R-3 angetrieben wird, ist als Losrad auf der Vorgelegewelle 30 angeordnet und durch Aktivieren des Synchronisierkupplungsgliedes SR, das auf der Vorgelegewelle 30 angeordnet ist betätigbar.

Im einzelnen wird der erste Gang 1 durch Betätigen des Synchronisierkupplungsgliedes S1/2 nach links geschaltet. Das Zahnrad 1-1 wird dann an die Antriebswelle 10 gekoppelt. Es überträgt seine Drehung über das Zahnrad 1-2 auf die Vorgelegewelle 30 und von dieser über das erste Konstantradpaar K1, das durch Betätigen des Synchronisierkupplungsgliedes SK1/K2 nach rechts mit der Abtriebswelle 20 verbunden ist, auf die Abtriebswelle. Entsprechend werden der zweite Gang und der dritte Gang durch Betätigen des Synchronisierkupplungsgliedes S1/2 nach rechts bzw. des Synchronisierkupplungsgliedes S3/K2 nach links betätigt.

Zum Schalten des vierten Ganges wird das Synchronisierkupplungsglied S3/K2 nach rechts betätigt, wobei das Zahnrad K2-1 des Konstantradpaares K2 mit der Antriebswelle 10 verbunden wird. Es überträgt seine Drehung über das Zahnrad K2-2 auf die Vorgelegewelle 30 und von dieser über das Konstantradpaar K1, dessen Zahnrad K1-1 (Synchronisierkupplungsglied SK1/K2 nach rechts betätigt) mit der Abtriebswelle 20 verbunden ist, auf die Abtriebswelle 20. Die Zahnräder K2-1 und K2-2 des Konstantradpaares K2 bilden somit die Übersetzung des vierten Ganges.

Zum Schalten der nachfolgenden Gänge wird fremdgesteuert und automatisch während der Wählbewegung das Synchronisierkupplungsglied SK1/K2 nach links betätigt. Zum Einschalten des fünften Ganges wird das Synchronisierkupplungsglied S3/K2 ebenfalls nach links betätigt, so dass nun die Übertragung von der Vorgelegewelle 30 auf die Abtriebswelle 20 über das Konstantradpaar K2 erfolgt. Dem Schaltbild der Fig. 4 ist entnehmbar, dass vom Wählen von der Gasse des dritten und vierten Ganges in die Gasse des fünften und sechsten Ganges die Umschaltung von SK1/K2 fremdkraftgesteuert betätigt wird.

Beim Schalten des fünften Ganges erfolgt daher die Übertragung der Drehung von der Antriebswelle 10 über die Zahnräder 3-1 und 3-2 des dritten Ganges auf die Vorgelegewelle 30 und von dieser über die Zahnräder K2-2 und K2-1 des Konstantradpaares K2 auf die Abtriebswelle 20. Nach dem Umschalten der Konstantradpaare K1 und K2 werden also die Zahnräder K2-1 und K2-2 des Konstantradpaares K2 im Zusammenhang mit den Zahnrädern 3-1 und 3-2 des dritten Ganges zur Darstellung des fünften Ganges benutzt. Der sechste Gang ist direkt und entsteht durch Schalten von S3/K2 nach rechts bei gleichbleibender Stellung von SK1/K2.

Die Fig. 3 zeigt die bei den einzelnen Gängen vorliegenden Übersetzungen und Gangsprünge.

Es ist erkennbar, dass die einzelnen Übersetzungen des vorliegenden Getriebes einer bestimmten Logik genügen müssen, da einzelne Zahnradpaare mehrfach verwendet werden. So werden die Zahnräder K2-1 und K2-2 des Konstantradpaares K2 einmal zur Darstellung des vierten Ganges im Zusammenhang mit den Zahnrädern K1-1 und K1-2 des Konstantradpaares K1 und einmal als Konstantradpaar K2 verwendet. Die Zahnräder 3-1 und 3-2 des dritten Ganges werden im Zusammenhang mit den Zahnrädern K1-1 und K1-2 des Konstantradpaares K1 zur Darstellung des dritten Ganges und in Zusammenhang mit den Zahnrädern K2-1 und K2-2 des Konstantradpaares K2 zur Darstellung des fünften Ganges verwendet. Mit einem derartigen Aufbau läßt sich eine teilweise progressive Gangstufung darstellen.

Um die gewünschten, teilweise progressiven Gangsprünge zu ermöglichen, ist es eine Bedingung, dass die Übersetzungen der Konstantradpaare K1 und K2 in einem Übersetzungsverhältnis zueinander stehen, welches das gleiche ist, wie von einzelnen Gangrädern. Es gilt für das Getriebe der Fig. 2: i_{K1}/i_{K2} = (ϕ₃)² .

Bei der ersten Ausführungsform sind die Gangsprünge ϕ1 und ϕ2 vom erstem zum zweiten Gang bzw. vom zweiten zum dritten Gang frei wählbar und damit progressiv ausführbar. Es folgt dann ein geometrischer Teil, bei dem sich die Stufung nicht mehr ändert, weil die zuvor genannte Bedingung erfüllt sein muß, die sich aus der Teilung der Übersetzung des vierten Ganges durch die Übersetzung des fünften Ganges und der Übersetzung des dritten Ganges durch die Übersetzung des vierten Ganges ergibt. Während also in den Gängen eins 1 bis drei eine progressive Gangstufung zu verzeichnen ist, liegt für die höheren Gänge vier bis sechs eine geometrische Gangstufung vor.

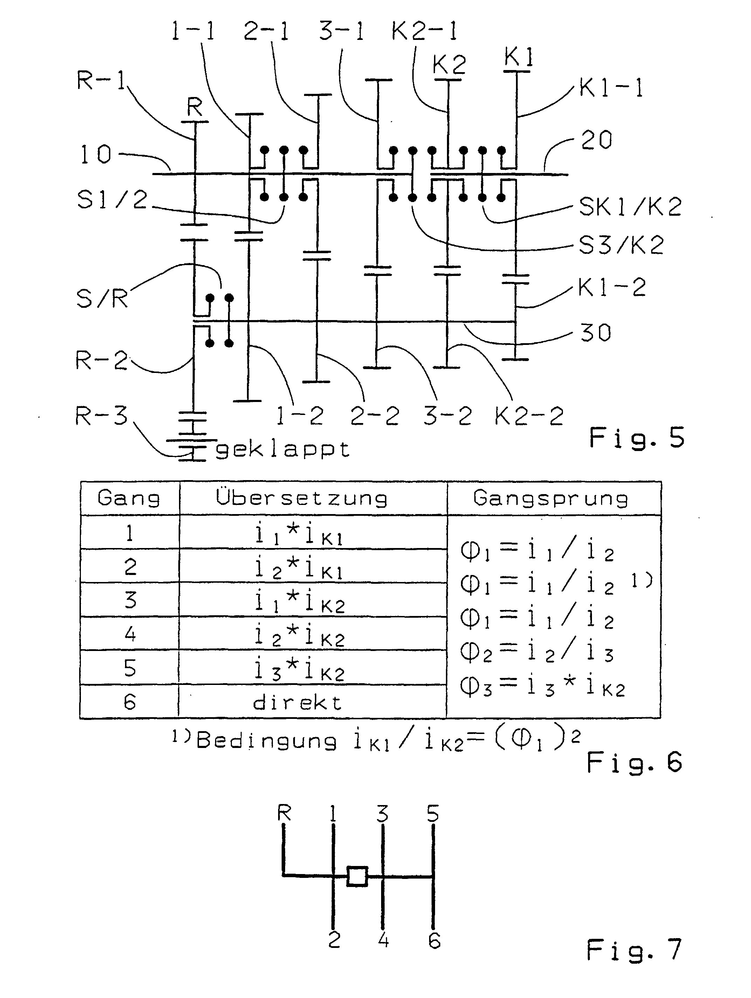

Dieser geometrische Anteil der Gangstufung, der bei der ersten Ausführungsform im Bereich der höheren Gänge (vierter, fünfter und sechster Gang) liegt, kann gemäß der zweiten Ausführungsform, die in der Fig. 5 dargestellt ist, zum Anfang der Schaltung verlegt werden. Dies bedeutet, dass zwischen den Gängen 1, 2 und 3 die gleichen Gangsprünge ϕ1 vorliegen (siehe Fig. 6) und dass gemäß Fig. 7 das fremdgesteuerte Umschalten der Konstantradpaare K1 und K2 beim Wählen von der Gasse zwischen dem ersten und zweiten Gang zur Gasse zwischen dem dritten und vierten Gang erfolgt.
Zwischen den Gängen vier und fünf bzw. fünf und sechs ist wieder eine progressive Ausführung der Gangsprünge möglich.

Der erste Gang wird durch Betätigen des Synchronisierkupplungsliedes S1/2 nach links geschaltet. Die Übertragung erfolgt über die Zahnräder 1-1, 1-2, die Vorgelegewelle 30 und von dieser über das Konstantradpaar K1 auf die Abtriebswelle (SK1/K2 nach rechts geschaltet). Der zweite Gang wird entsprechend durch Betätigen des Synchronisierkupplungsgliedes S1/2 nach rechts geschaltet. Beim Schalten zum dritten Gang, d. h. also von der Gasse des ersten und zweiten Ganges zur Gasse des dritten und vierten Ganges werden die Konstantradpaare K1 und K2 durch Betätigen des Synchronisierkupplungsgliedes SK1/K2 fremdkraftgesteuert nach links umgeschaltet. Der dritte Gang wird durch Betätigen des Synchronisierkupplungsgliedes S1/2 nach links geschaltet. Die Übertragung von der Eingangswelle 10 zur Ausgangswelle 20 erfolgt über die Zahnräder 1-1, 1-2, die Vorgelegewelle 30 und die Zahnräder K2-2, K2-1. Entsprechend wird zum Schalten des vierten Ganges das Synchronisierkupplungsglied S1/2 nach rechts betätigt und die Übertragung erfolgt über die Zahnräder 2-1, 2-2, die Vorgelegewelle 30 und die Zahnräder K2-2, K2-1. Zum Schalten des fünften Ganges wird das Synchronisierkupplungsglied S3/K2 nach links betätigt und die Übertragung erfolgt über die Zahnräder 3-1, 3-2, die Vorgelegewelle 30 und die Zahnräder K2-2, K2-1. Der sechste Gang wird wieder durch Betätigen des Synchronisierkupplungsgliedes S3/K2 nach rechts (Synchronisierkupplungsglied SK1/K2 ist nach links betätigt) betätigt, wobei die Übertragung von der Eingangswelle 10 auf die Ausgangswelle 20 direkt über das Zahnrad K2-1 des Konstantradpaares K2 erfolgt. Für die zweite Ausführungsform gilt die Bedingung: i_{K1}/i_{K2} = (ϕ₁)², um eine teilweise progressive Gangstufung zu ermöglichen.

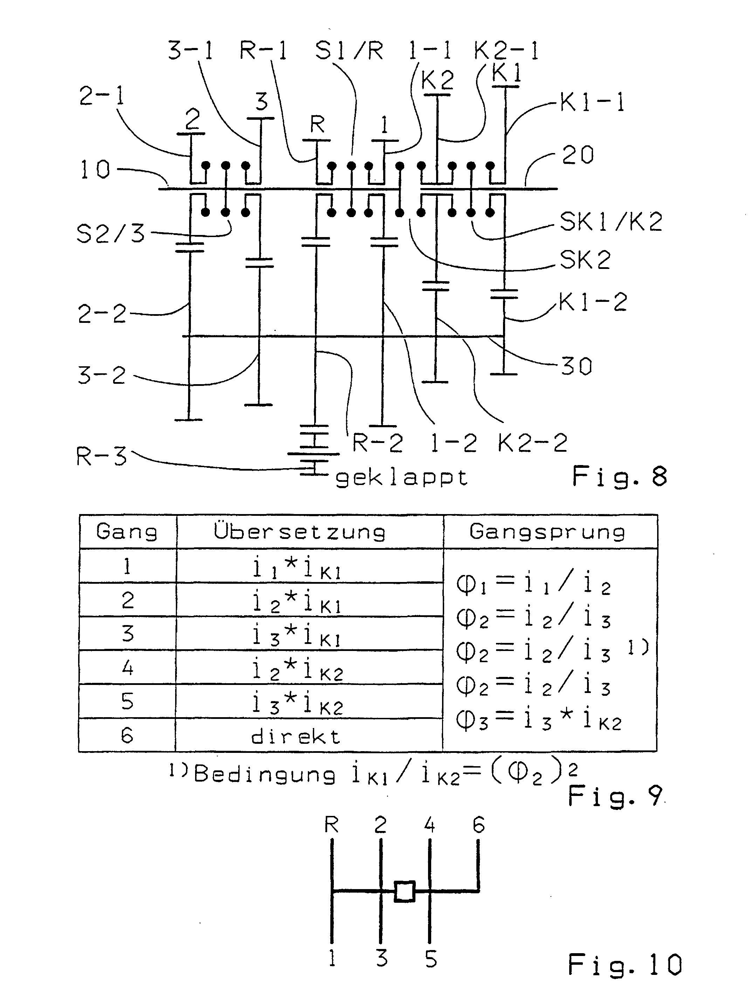

Gemäß der Ausführungsform der Fig. 8 liegt eine progressive Gangstufung zwischen dem ersten und zweiten Gang und zwischen dem fünften und sechsten Gang vor, wohingegen der geometrische Anteil in der Mitte (zweiter, dritter und vierter Gang) vorliegt. Dies ist aus der Fig. 9 erkennbar. Gemäß Fig. 10 erfolgt das fremdgesteuerte Umschalten der Konstantradpaare K1 und K2 beim Wählen von der Gasse des zweiten und dritten Ganges zur Gasse des vierten und fünften Gasse. Es gilt die Bedingung: i_{K1}/i_{K2} = (ϕ₂)²

Der erste, zweite und dritte Gang werden durch Betätigen des Synchronisierkupplungsgliedes S1/R nach rechts bzw. des Synchronisierkupplungsgliedes S2/3 nach links bzw. rechts geschaltet, wobei die Übertragung über das Konstantradpaar K1 erfolgt (Synchronisierkupplungsglied SK1/K2 nach rechts betätigt). Beim Schalten vom dritten zum vierten Gang werden das Synchronisierkupplungsglied SK1/K2 nach links und das Synchronisierkupplungsglied S2/3 nach links betätigt, wobei die Übertragung von der Antriebswelle 10 auf die Vorgelegewelle 30 über die Zahnräder 2-1 und 2-2 und von der Vorgelegewelle 30 auf die Ausgangswelle 20 über die Zahnräder K2-2, K2-1 erfolgt. Zum Schalten in den fünften Gang wird das Synchronisierkupplungsglied S2/3 nach rechts betätigt, wobei die Übertragung zur Ausgangswelle 20 über die Zahnräder 3-1 und 3-2, die Vorgelegewelle 30 und wieder über die Zahnräder K2-2 und K2-1 erfolgt. Der sechste Gang wird durch Betätigen des Synchronisierkupplungsgliedes S6 nach rechts geschaltet, wobei die Übertragung von der Eingangswelle 10 zur Ausgangswelle 20 direkt über das Zahnrad K2-1 des Konstantradpaares K2 erfolgt.

Die Ausführungsform der Fig. 11 entspricht im wesentlichen derjenigen der Fig. 8, wobei lediglich das Synchronisierkupplungsglied S1/R zum Umschalten zwischen dem Rückwärtsgang und dem ersten Gang auf der Vorgelegewelle 30 angeordnet ist.

## Patentansprüche

1. Getriebe mit einer Antriebswelle (10), einer koaxial zu dieser angeordneten Abtriebswelle (20) und einer Vorgelegewelle (30), wobei den einzelnen Gängen des Getriebes jeweils Zahnradpaare zugeordnet sind, die die Drehung der Antriebswelle (10) wahlweise auf die Vorgelegewelle (30) übertragen, und ein erstes Konstantradpaar (K1) vorgesehen ist, das die Drehung der Vorgelegewelle (30) auf die Abtriebswelle (20) übertragen kann, und ein zweites Konstantradpaar (K2) vorgesehen ist, das die Drehung der Vorgelegewelle (30) auf die Abtriebswelle (20) übertragen kann und wahlweise die Zahnräder (1-1, 1-2; 2-1, 2-2; 3-1, 3-2) eines Ganges einer ersten Gruppe von Gängen zwischen der Antriebswelle (10) und der Vorgelegewelle (30) wirksam schaltbar sind, wobei die Drehung der Vorgelegewelle (30) über das erste Konstantradpaar (K1) auf die Abtriebswelle (20) übertragbar ist, und dass nach dem Umschalten auf das zweite Konstantradpaar (K2) ein Gang einer zweiten. Gruppe von Gängen jeweils durch Auswahl eines Zahnradpaares (1-1, 1-2; 2-1,2-2; 3-1,3-2) und Übertragen der Drehung der Vorgelegewelle (30) über das zweite Konstantradpaar (K2) auf die Abtriebswelle (20) schaltbar ist, **dadurch gekennzeichnet, dass** die Übersetzungen der Konstantenradpaare (K1 und K2) in einem Verhältnis zueinander stehen, das dem Quadrat des Verhältnisses zweier Übersetzungen in einem geometrischen teil der Gangstufung entspricht.

2. Getriebe nach Anspruch 1, **dadurch gekennzeichnet, dass** der erste, zweite, dritte und vierte Gang zur ersten Gruppe gehören, dass das Zahnradpaar des vierten Ganges durch die Zahnräder (K2-1, K2-2) des zweiten Konstantradpaares gebildet wird und dass nach dem Umschalten vom ersten (K1) auf das zweite (K2) Konstantradpaar der fünfte Gang durch die Zahnräder des dritten Ganges und des zweiten Konstantradpaares (K2) gebildet wird, wobei die Gangsprungbedingung (ϕ3)² = i_{K2}/i_{K2} gilt.

3. Getriebe nach Anspruch 2, **dadurch gekennzeichnet, dass** auf der Antriebswelle (10) ein dem ersten Gang zugeordnetes erstes Zahnrad (1-1) als Losrad, ein dem zweiten Gang zugeordnetes erstes Zahnrad (2-1) als Losrad und ein dem dritten Gang zugeordnetes erstes Zahnrad (3-1) als Losrad angeordnet sind, dass ein erstes Synchronisierkupplungsglied (S1/2) vorgesehen ist, um wahlweise das erste Zahnrad (1-1) des ersten Ganges oder das erste Zahnrad (2-2) des zweiten Ganges mit der Antriebswelle (10) drehfest zu verbinden, dass auf der Abtriebswelle (20) ein erstes Zahnrad (K2-1) des zweiten Konstantradpaares (K2) als Losrad und ein erstes Zahnrad (K1-1) des ersten Konstantradpaares (K1) als Losrad angeordnet sind, dass ein zweites Synchronisierkupplungsglied (S3/K2) wahlweise schaltbar ist, um die Antriebswelle (10) mit dem ersten Zahnrad (3-1) des dritten Ganges zu verbinden oder um das erste Zahnrad (K2-1) des zweiten Konstantradpaares (K2) mit der Antriebswelle (10) zu verbinden, sodass es als erstes Zahnrad des vierten Ganges verwendbar ist, dass den ersten Zahnrädern jeweils ein drehfest auf der Vorgelegewelle (30) angeordnetes zweites Zahnrad zugeordnet ist, dass ein drittes synchronisierkupplungsglied (SK1/K2) schaltbar ist, um das erste Zahnrad (K2-1) des zweiten Konstantradpaares (K2) oder das erste Zahnrad (K1-1) des ersten Konstantradpaares mit der Abtriebswelle (20) zu verbinden, wobei beim Umschalten vom vierten zum fünften Gang das erste Zahnrad (K1-1) des ersten Konstantradpaares (K1) von der Abtriebswelle (20) getrennt wird und das erste Zahnrad (K2-1) des zweiten Konstantradpaares (K2) mit der Abtriebswelle (20) verbunden wird sowie das erste Zahnrad (3-1) des dritten Ganges an die Antriebswelle (10) gekoppelt wird und dass zum Schalten des sechsten Ganges durch Betätigen des zweiten Synchronisierkupplungsgliedes (S3/K2) die Antriebswelle direkt über das erste Zahnrad (K2-1) des zweiten Konstantradpaares mit der Abtriebswelle (20) verbunden wird.

4. Getriebe nach Anspruch 1, **dadurch gekennzeichnet, dass** der erste und zweite Gang zur ersten Gruppe gehören und dass nach dem Umschalten vom ersten Konstantradpaar (K1) auf das zweite Konstantradpaar (K2) der dritte Gang durch die Zahnräder des ersten Ganges und des zweiten Konstantradpaares (K2) und der vierte Gang durch die Zahnräder des zweiten Ganges und des zweiten Konstantradpaares (K2) gebildet werden und dass der fünfte Gang durch die Zahnräder des dritten Ganges, die zwischen der Antriebswelle (10) und der Vorgelegewelle (30) angeordnet sind und die Zahnräder des zweiten Konstantradpaares (K2) gebildet werden, wobei die Gangsprungbedingung (ϕ1)² = i_{K1}/i_{K2} gilt.

5. Getriebe nach Anspruch 1, **dadurch gekennzeichnet, dass** der erste, zweite und dritte Gang der ersten Gruppe angehören und dass nach dem Umschalten vom ersten Konstantradpaar (K1) auf das zweite Konstantradpaar (K2) der vierte Gang durch die Zahnräder des zweiten Ganges und des zweiten Konstantradpaares (K2) und der fünfte Gang durch die Zahnräder des dritten Ganges und des zweiten Konstantradpaares (KZ) gebildet werden, wobei die Gangsprungbedingung (ϕ2)² = iₖ₁/iₖ₂ gilt.

6. Getriebe nach Anspruch 5, **dadurch gekennzeichnet, dass** auf der Antriebswelle (10) ein erstes Zahnrad (1-1) des ersten Ganges als Losrad, ein erstes Zahnrad (2-1) des zweiten Ganges als Losrad, ein erstes Zahnrad (3-1) des dritten Ganges als Losrad und ein erstes Zahnrad (R-1) des Rückwärtsganges (R) als Losrad angeordnet sind, dass auf der Abtriebswelle (20) ein erstes Zahnrad (K1-1) des ersten Konstantradpaares (K1) als Losrad und ein erstes Zahnrad (K2-1) des zweites Konstantradpaares (K2) als Losrad angeordnet sind, dass den ersten Zahnrädern jeweils ein drehfest auf der Vorgelegewelle (30) angeordnetes zweites Zahnrad zugeordnet ist, dass bei Auswahl des ersten Ganges oder des Rückwärtsganges (R) durch Betätigen eines fünften Synchronisierkupplungsgliedes (S1/R) und Verbinden des ersten Zahnrades (1-1) des ersten Ganges bzw. des ersten Zahnrades (R-1) des Rückwartsganges (R) mit der Antriebswelle (10), oder des zweiten und dritten Ganges durch Betätigen eines sechsten Synchronisierkupplungsgliedes (S2/3) und Verbinden des ersten Zahnrades (2-1) des zweiten Ganges oder des ersten Zahnrades (3-1) des dritten Zahnrades mit der Antriebswelle (10) die Drehung der Vorgelegewelle (30) über das erste Konstantradpaar (K1) auf die Abtriebswelle (20) übertragen wird, dessen erstes Zahnrad (K1-1) durch Betätigen eines dritten Synchronisierkupplungsgliedes (SK1/K2) mit der Abtriebswelle (20) verbunden ist, dass beim Umschalten vom dritten auf den vierten Gang das dritte Synchronisierkupplungsglied (SK1/K2) das erste Zahnrad (K2-1) des zweiten Konstantradpaares (K2) mit der Abtriebswelle (20) verbindet und das erste Zahnrad (K1-1) des ersten Konstantradpaares (K1) von der Abtriebswelle (20) trennt und das sechste Syncbronisierkupplungsglied (S2/3) das erste Zahnrad (2-1) des zweiten Ganges mit der Antriebswelle (10) verbindet, dass beim Schalten des fünften Ganges das sechste Synchronisierkupplungsglied (S2/3) das erste Zahnrad (3-1) des dritten Ganges an die Antriebswelle (10) koppelt und dass beim Schalten des sechsten Ganges ein siebtes Synchronisierkupplungsglied (SK2) das erste Zahnrad (K2-1) des zweiten Konstantradpaares (K2) an die Antriebswelle (10) koppelt, sodass deren Drehung über das erste Zahnrad (K2-1) des zweiten Konstantradpaares (K2) direkt auf die Abtriebswelle (20) gekoppelt wird.

7. Getriebe nach Anspruch 5, **dadurch gekennzeichnet, dass** auf der Antriebswelle (10) ein erstes Zahnrad (1-1) des ersten Ganges drehfest, ein erstes Zahnrad (2-1) des zweiten Ganges als Losrad, ein erstes Zahnrad (3-1) des dritten Ganges als Losrad und ein erstes Zahnrad (R-1) des Rückwärtsganges (R) drehfest angeordnet sind, dass auf der Vorgelagewelle (30) ein zweites Zahnrad (1-2) des ersten Ganges und ein zweites Zahnrad (R-2) des Rückwärtsganges (R) als Losräder angeordnet sind, dass ein fünftes Synchronisierkupplungsglied (S1/R) betätigbar ist, um das zweite Zahnrad (R-2) des Rückwärtsganges (R) mit der Vorgelegewalle (30) zu verbinden oder um das zweite Zahnrad (1-2) das ersten Ganges mit der Vorgelegewelle (30) zu verbinden, dass auf der Abtriebswelle (20) ein erstes Zahnrad (K1-1) des ersten Konstantradpaares (K1) als Losrad angeordnet ist, dass auf der Abtriebswelle (20) ein erstes Zahnrad (K2-1) des zweiten Konstantradpaares als Losrad angeordnet ist, dass die zweiten Zahnräder des ersten und zweiten Konstantradpaares (K1, K2) drehfest auf der vorgelegewelle (30) angeordnet sind, dass bei Auswahl des ersten, zweiten und dritten Ganges sowie des Rückwärtsganges die Drehung der Vorgelegewelle (30) aber das erste Konstantradpaar (K1) auf die Abtriebswelle (20) übertragen wird, dass beim Umschalten vom dritten auf den vierten Gang das dritte Synchronisierkupplungsglied (SK1/K2) das erste Zahnrad (K2-1) des zweiten Konstantradpaares mit der Abtriebswelle (20) verbindet und das erste Zahnrad (K1-1) des ersten Konstantradpaares (K1) von der Abtriebswelle (20) trennt und das sechste Synchronisierkupplungsglied (S2/3) das erste Zahnrad (2-1) des zweiten Ganges an die Antriebswelle (10) koppelt, dass beim Schalten des fünften Ganges das sechste Synchronisierkupplungsglied (52/3) das erste Zahnrad (3-1) des dritten Ganges an die Antriebswelle (10) koppelt und dass beim schalten des sechsten Ganges das zweite Synchronisierkupplungsglied (S3/K2) das erste Zahnrad (K2-1) des zweiten Konstantradpaares (K2) an die Antriebswelle (10) koppelt, sodass deren Drehung über das erste Zahnrad (K2-1) des zweiten Konstantradpaares direkt auf die Abtriebswelle (20) gekoppelt wird.

## Claims

1. The invention relates to a transmission with an input shaft (10) and an output shaft (20) arranged concentrically to said input shaft as well as a countershaft (30), whereby the individual gears of the transmission have pairs of gears assigned to them, which alternately transmit the rotation of the input shaft (10) to the countershaft (30), and with a first constant gear pair (K1) being provided, which can transmit the rotation of the countershaft (30) to the output shaft (20), and with a second constant gear pair (K2) being provided, which can transmit the rotation of the countershaft (30) to the output shaft (20), and whereby the toothed wheels (1-1, 1-2; 2-1, 2-2; 3-1, 3-2) of a gear of a first group of gears can be selected to be effective between the input shaft (10) and the countershaft (30), with the rotation of the countershaft (30) being transmittable to the output shaft (20) via the first constant gear pair (K1); and that following changeover to the second constant gear pair (K2), a gear of a second group of gears can be switched to the output shaft (20) via the second constant gear pair (K2) through selection of a toothed gear pair (1-1, 1-2; 2-1, 2-2; 3-1, 3-2) and transmission of the rotation of the countershaft (30) via the second constant gear pair (K2), **characterized in that** the relationship of the ratios of the constant gear pairs (K1 and K2) is such that it corresponds to the square of the relationship of two ratios in a geometric part of the gear steps.

2. A transmission according to claim 1, **characterized in that** first, second, third and fourth gear belong to the first group; that the gear pair of the fourth gear is formed by the gears (K2-1, K1-2) of the second constant gear pair; and that the fifth gear is formed by the gears of the third gear and those of the second constant gear pair (K2) after changeover from the first (K1) to the second (K2) constant gear pair, whereby the transmission stepping condition (ϕ3)² = iₖ₂ / iₖ₂ applies.

3. Transmission according to claim 2, **characterized in that** the input shaft (10) has arranged on it: a first toothed wheel (1-1) assigned as idler to the first gear, a first toothed wheel (2-1) assigned as'idler to the second gear, and a first toothed wheel (3-1) assigned as idler to the third gear; and that a first synchronizer clutch element (S1/2) is provided to link either the first toothed wheel (1-1) of the first gear or the first toothed wheel (2-2) of the second gear non-rotationally with the input shaft (10); and that a first gear (K2-1) of the second constant gear pair (K2) is arranged as idler on the output shaft (20) and a first gear (K1-1) of the first constant gear pair (K1) is arranged as idler on the output shaft (20); that a second synchronizer clutch element (S3/K2) is optionally selectable to link the input shaft (10) with the first toothed wheel (3-1) of the third gear or to link the first gear (K2-1) of the second constant gear pair (K2) with the input shaft (10), so that it can be used as first toothed wheel of the fourth gear; that each first toothed wheel has a second toothed wheel non-rotationally mounted on the countershaft (30) assigned to it; that a third synchronizer clutch element (SK1/K2) can be engaged to link the first gear (K2-1) of the second constant gear pair (K2) or the first gear (K1-1) of the first constant gear pair (K1) with the output shaft (20), whereby during the changeover from the fourth to the fifth gear, the first gear (K1-1) of the first constant gear pair (K1) is separated from the output shaft (20) and the first gear (K2-1) of the second constant gear pair (K2) is linked to the output shaft (20) and the first toothed wheel (3-1) of the third gear is linked to the input shaft (10); and that engagement of the sixth gear through actuation of the synchronizer clutch element (S3/K2) occurs through direct connection of the input shaft with the output shaft (20) via the first gear (K2-1) of the second constant gear pair.

4. Transmission according to claim 1, **characterized in that** the first and the second gear belong to the first group and that following changeover from the first constant gear pair (K1) to the second constant gear pair (K2), the third gear is formed by the toothed wheels of the first gear and the gears of the second constant gear pair (K2), the fourth gear is formed by the toothed wheels of the second gear and the gears of the second constant gear pair (K2), the fifth gear is formed by the toothed wheels of the third gear, which are arranged between the input shaft (10) and the countershaft (30), and the gears of the second constant gear pair (K2), whereby the transmission stepping condition (ϕ1) ² = iₖ₁ / iₖ₂ applies.

5. Transmission according to claim 1, **characterized in that** first, second and third gear belong to the first group and that following changeover from the first constant gear pair (K1) to the second constant gear pair (K2), the fourth gear is formed by the toothed wheels of the second gear and the gears of the second constant gear pair (K2); the fifth gear is formed by the toothed wheels of the third gear and the gears of the second constant gear pair (K2), whereby the transmission stepping condition (ϕ2) ² = iₖ₁ / iₖ₂ applies.

6. Transmission according to claim 5, **characterized in that** the input shaft (10) has arranged on it: a first toothed wheel (1-1) of the first gear as idler, a first toothed wheel (2-1) of the second gear as idler, a first toothed wheel (3-1) of the third gear as idler, and a first toothed wheel (R-1) of the reverse gear (R) as idler; that the output shaft (20) has arranged on it: a first gear (K1-1) of the first constant gear pair (K1) as idler and a first gear (K2-1) of the second constant gear pair (K2) as idler; that each first toothed wheel has a second toothed wheel non-rotationally arranged on the countershaft (30) assigned to it; that upon selection of the first gear or the reverse gear (R) - through actuation of a fifth synchronizer clutch element (S1/R) and connection of the first toothed wheel (1-1) of the first gear or the first toothed wheel (R-1) of the reverse gear (R) with the input shaft (10) - or of the second or third gear - through actuation of a sixth synchronizer clutch element (S2/3) and connection of the first toothed wheel (2-1) of the second gear or of the first toothed wheel (3-1) of the third gear with the input shaft (10) - the rotation of the countershaft (30) is transmitted via the first constant gear pair (K1) to the output shaft (20), whose first toothed wheel (K1-1) through actuation of a third synchronizer clutch element (SK1/K2) is linked to the output shaft (20); that during changeover from the third to the fourth gear, the third synchronizer clutch element (SK1/K2) links the first gear (K2-1) of the second constant gear pair (K2) with the output shaft (20) and separates the first gear (K1-1) of the first constant gear pair (K1) from the output shaft and the sixth synchronizer clutch element (S2/3) links the first toothed wheel (2-1) of the second gear with the input shaft (10); that during engagement of the fifth gear, the sixth synchronizer clutch element (S2/3) links the first toothed wheel (3-1) with the input shaft (10); and that during engagement of the sixth gear a seventh synchronizer clutch element (SK2) links the first gear (K2-1) of the second constant gear pair (K2) with the input shaft (10), so that the latter's rotation is directly transmitted to the output shaft (20) via the first gear (K2-1) of the second constant gear pair (K2).

7. Transmission according to claim 5, **characterized in that** the input shaft (10) has arranged on it: a non-rotational first toothed wheel (1-1) of the first gear, a first toothed wheel (2-1) of the second gear as idler, a first toothed wheel (3-1) of the third gear as idler, and a non-rotational toothed wheel (R-1) of the reverse gear (R); that the countershaft (30) has arranged on it: a second toothed wheel (1-2) of the first gear as idler and a second toothed wheel (R-2) of the reverse gear (R) as idler; that a fifth synchronizer clutch element (S1/R) can be actuated to link the second toothed wheel (R-2) of the reverse gear (R) with the countershaft (30) or to link the second toothed wheel (1-2) of the first gear with the countershaft (30); that the output shaft (20) has a first gear (K1-1) of the first constant gear pair (K1) arranged on it as idler; that the output shaft (20) has a first gear (K2-1) of the second constant gear pair (K2) arranged on it as idler; that the second gears of the first and second constant gear pairs (K1, K2) are arranged non-rotationally on the countershaft (30); that upon selection of first, second, third or reverse gear, the rotation of the countershaft (30) is transmitted to the output shaft (20) via the first constant gear pair (K1); that during changeover from third to fourth gear, the third synchronizer clutch element (SK1/K2) links the first gear (K2-1) of the second constant gear pair with the output shaft (20) and separates the first gear (K1-1) of the first constant gear pair (K1) from the output shaft (20), and the sixth synchronizer clutch element (S2/3) links the first toothed wheel (2-1) of the second gear with the input shaft (10); that upon selection of the fifth gear, the sixth synchronizer clutch element (S2/3) links the first toothed wheel (3-1) of the third gear with the input shaft (10); and that upon selection of the sixth gear, the second synchronizer clutch element (S3/K2) links the first gear (K2-1) of the second constant gear pair (K2) with the input shaft (10), so that its rotation is directly transmitted to the output shaft (20) via the first gear (K2-1) of the second constant gear pair.

## Revendications

1. Boîte de vitesses dotée d'un arbre d'entrée (10), d'un arbre de sortie (20) disposé coaxialement au dit arbre d'entrée, et d'un arbre intermédiaire (30), sachant qu'aux différents rapports de la boîte de vitesses sont associés des trains d'engrenages transmettant la rotation de l'arbre d'entrée (10) optionnellement à l'arbre intermédiaire (30), et sachant qu'il est prévu un premier train d'engrenages constant (K1) pouvant transmettre la rotation de l'arbre intermédiaire (20) et qu'il est prévu un deuxième train d'engrenages constant (K2) pouvant transmettre la rotation de l'arbre intermédiaire (30) sur l'arbre de sortie (20) et que, optionnellement, les engrenages (1-1, 1-2 ; 2-1, 2-2 ; 3-1, 3-2) d'une vitesse d'un premier groupe de rapports entre l'arbre d'entrée (10) et l'arbre intermédiaire (30) sont effectivement sélectionnables, sachant que la rotation de l'arbre intermédiaire (30) peut être transmise, par l'intermédiaire du premier train d'engrenages constant (K1), sur l'arbre de sortie (20) et sachant qu'après le passage au deuxième train d'engrenages constant (K2) il est possible d'enclencher une vitesse d'un deuxième groupe de rapports, respectivement par sélection d'un des trains d'engrenages (1-1, 1-2 ; 2-1, 2-2; 3-1, 3-2) et par transmission de la rotation de l'arbre intermédiaire (30) par l'intermédiaire du deuxième train d'engrenages constant (K2) sur l'arbre de sortie (20), **caractérisée en ce que** les rapports de démultiplication des trains d'engrenages constants (K1 et K2) sont en un rapport les uns aux autres correspondant au carré des rapports de deux rapports de démultiplication dans une partis géométrique de l'étagement des vitesses.

2. Boîte de vitesses selon la revendication 1, **caractérisée en ce que** la 1ère, la 2ème, la 3ème et la 4ème vitesses appartiennent au premier groupe, **en ce que** le train d'engrenages de la 4ème vitesse est formée par les engrenages (K2-1, K2-2) du deuxième train d'engrenages constant et **en ce que** après le passage du premier train d'engrenages constant (K1) au deuxième train d'engrenages constant (K2) la 5ème vitesse est formée par les engrenages de la 3ème vitesse et ceux du deuxième train d'engrenages constant (K2), sachant qu'en termes d'étagement de vitesses vaut la condition suivante : (Ø3) ² = iₖ₂/iₖ₂.

3. Boîte de vitesses selon la revendication 2, **caractérisée en ce que** sur l'arbre d'entrée (10) sont disposés un premier engrenage (1-1) associé à la 1ère vitesse en tant que pignon fou, un premier engrenage (2-1) associé à la 2ème vitesse en tant que pignon fou et un premier engrenage (3-1) associé à la 3ème vitesse en tant que pignon fou, **en ce qu'**il est prévu un premier élément d'accouplement de synchronisation (S1/2) pour pouvoir, optionnellement, accoupler le premier engrenage (1-1) du premier rapport ou le premier engrenage (2-2) du deuxième rapport de façon rigide en torsion avec l'arbre d'entrée (10), **en ce que** sur l'arbre de sortie (20) sont disposés un premier engrenage (K2-1) du deuxième train d'engrenages constant (K2) en tant que pignon fou et un premier engrenage (K1-1) du premier train d'engrenages constant (K1) en tant que pignon fou, **en ce que** un deuxième élément d'accouplement de synchronisation (S3/K2) est optionnellement sélectionnable afin d'accoupler l'arbre d'entrée (10) avec le premier engrenage (3-1) de la 3ème vitesse ou afin d'accoupler le premier engrenage (K2-1) du deuxième train d'engrenages constant (K2) avec l'arbre d'entrée (10), de façon à ce que celui-ci puisse être utilisé en tant que premier engrenage de la 4ème vitesse, **en ce que** respectivement aux premiers engrenages est associé un deuxième engrenage fixé de façon rigide en rotation sur l'arbre intermédiaire (30), **en ce que** un troisième élément d'accouplement de synchronisation (SK1/K2) est sélectionnable afin de pouvoir accoupler le premier engrenage (K2-1) du deuxième train d'engrenages constant (K2) ou le premier engrenage (K1-1) du premier train d'engrenages constant avec l'arbre de sortie (20), sachant que lors du passage de la 4ème vitesse à la 5ème vitesse le premier engrenage (K1-1) du premier train d'engrenages constant (K1) est désaccouplé de l'arbre de sortie (20) et sachant que le premier engrenage (K2-1) du deuxième train d'engrenages constant (K2) est accouplé avec l'arbre de sortie (20) et que le premier engrenage (3-1) de la 3ème vitesse est accouplé à l'arbre d'entrée (10) et **en ce que** pour l'engagement de la 6ème vitesse par l'actionnement du deuxième élément d'accouplement de synchronisation (S3/K2) l'arbre d'entrée est accouplé directement par l'intermédiaire du premier engrenage (K2-1) du deuxième train d'engrenages constant avec l'arbre de sortie (20).

4. Boîte de vitesses selon la revendication 1, **caractérisée en ce que** la 1ère vitesse et la 2ème vitesse appartiennent au premier groupe et **en ce que** après le passage du premier train d'engrenages constant (K1) au deuxième train d'engrenages constant (K2) la 3ème vitesse est formée par les engrenages de la 1ère vitesse et du deuxième train d'engrenages constant (K2) et **en ce que** la 4ème vitesse est formée par les engrenages de la 2ème vitesse et du deuxième train d'engrenages constant (K2), et **en ce que** la 5ème vitesse est formée par les engrenages de la 3ème vitesse, qui sont disposés entre l'arbre d'entrée (10) et l'arbre intermédiaire (30), et par les engrenages du deuxième train d'engrenages constant (K2), sachant qu'en termes d'étagement de vitesses vaut la condition suivante : (Ø1) ² = iₖ₁/iₖ₂.

5. Boîte de vitesses selon la revendication 1, **caractérisée en ce que** la 1ère, la 2ème, la 3ème et la 4ème vitesses appartiennent au premier groupe et **en ce que** après le passage du premier train d'engrenages constant (K1) au deuxième train d'engrenages constant (K2) la 4ème vitesse est formée par les engrenages de la 2ème vitesse et du' deuxième train d'engrenages constant (K2) et **en ce que** la 5ème vitesse est formée par les engrenages de la 3ème vitesse et du deuxième train d'engrenages constant (K2), sachant qu'en termes d'étagement de vitesses vaut la condition suivante : (Ø2) ² = iₖ₁/iₖ₂.

6. Boîte de vitesses selon la revendication 5, **caractérisée en ce que** sur l'arbre d'entrée (10) sont disposés un premier engrenage (1-1) de la 1ère vitesse en tant que pignon fou, un premier engrenage (2-1) de la 2ème vitesse en tant que pignon fou, un premier engrenage (3-1) de la 3ème vitesse en tant que pignon fou et un premier engrenage (R-1) de la marche arrière (R) en tant que pignon fou, **en ce que** sur l'arbre de sortie (20) sont disposés un premier engrenage (K1-1) du premier train d'engrenages constant (K1) en tant que pignon fou et un premier engrenage (K2-1) du deuxième train d'engrenages constant (K2) en tant que pignon fou, **en ce que** respectivement aux premiers engrenages est associé un deuxième engrenage monté de façon rigide en rotation sur l'arbre intermédiaire (30) qui transmet - lors de la sélection de la 1ère vitesse ou de la marche arrière (R) en actionnant un cinquième élément d'accouplement de synchronisation (S1/R) et en accouplant respectivement le premier engrenage (1-1) de la 1ère vitesse ou le premier engrenage (R-1) de la marche arrière (R) avec l'arbre d'entrée (10), ou lors de la sélection de la 2ème ou de la 3ème vitesses en actionnant un sixième élément d'accouplement de synchronisation (S2/3) et en accouplant le premier engrenage (2-1) de la 2ème vitesse ou du premier engrenage (3-1) de la 3ème vitesse avec l'arbre d'entrée (10) - la rotation de l'arbre intermédiaire (30) par l'intermédiaire du premier train d'engrenages constant (K1) sur l'arbre de sortie (20), dont le premier engrenage (K1-1) est accouplé avec l'arbre de sortie (20) en actionnant un troisième élément d'accouplement de synchronisation (SK1/K2), **en ce que** lors du passage de la 3ème à la 4ème vitesses le troisième élément d'accouplement de synchronisation (SK1/K2) établit l'accouplement entre le premier engrenage (K2-1) du deuxième train d'engrenages constant (K2) et l'arbre de sortie (20), et **en ce qu'**il désaccouple le premier engrenage (K1-1) du premier train d'engrenages constant (K1) de l'arbre de sortie (20), et **en ce que** le sixième élément d'accouplement de synchronisation (S2/3) établit l'accouplement entre le premier engrenage (2-1) de la 2ème vitesse et l'arbre d'entrée (10), **en ce que** lors de l'engagement de la Sème vitesse le sixième élément d'accouplement de synchronisation (S2/3) établit l'accouplement entre le premier engrenage (3-1) de la 3ème vitesse et l'arbre d'entrée (10) et **en ce que** lors de l'engagement de la sixième vitesse un septième élément d'accouplement de synchronisation (SK2) établit l'accouplement entre le premier engrenage (K2-1) du deuxième train d'engrenages constant (K2) et l'arbre d'entrée (10), de façon à ce que leur rotation soit couplée, par l'intermédiaire du premier engrenage (K2-1) du deuxième train d'engrenages constant (K2), directement avec l'arbre de sortie (20).

7. Boîte de vitesses selon la revendication 5, **caractérisée en ce que** sur l'arbre d'entrée (10) sont montés de façon rigide en rotation un premier engrenage (1-1) de la 1ère vitesse, un premier engrenage (2-1) de la 2ème vitesse en tant que pignon fou, un premier engrenage (3-1) de la 3ème vitesse en tant que pignon fou et un premier engrenage (R-1) de la marche arrière (R), **en ce que** sur l'arbre intermédiaire (30) sont disposés un deuxième engrenage (2-1) de la 1ère vitesse et un deuxième engrenage (R-2) de la marche arrière (R) en tant que pignons fous, **en ce que** un cinquième élément d'accouplement de synchronisation (S1/R) est actionnable afin de pouvoir accoupler le deuxième engrenage (R-2) de la marche arrière (R) avec l'arbre intermédiaire (30) ou afin de pouvoir accoupler le deuxième engrenage (1-2) de la 1ère vitesse avec l'arbre intermédiaire (30), **en ce que** sur l'arbre de sortie (20) est disposé un premier engrenage (K1-1) du premier train d'engrenages constant (K1) en tant que pignon fou, **en ce que** sur l'arbre de sortie (20) est disposé un premier engrenage (K2-1) du deuxième train d'engrenages constant en tant que pignon fou, **en ce que** les deuxièmes engrenages du premier et du deuxième train d'engrenages constant (K1, K2) sont montés de façon rigide en rotation sur l'arbre intermédiaire (30), **en ce que** lors de la sélection de la 1ère, de la 2ème et de la 3ème vitesses ainsi que lors de la sélection de la marche arrière la rotation de l'arbre intermédiaire (30) est transmise par l'intermédiaire du premier train d'engrenages constant (K1) sur l'arbre de sortie (20), **en ce que**, lors du passage de la 3ème à la 4ème vitesses le troisième élément d'accouplement de synchronisation (SK1/K2) établit l'accouplement entre le premier engrenage (K2-1) du deuxième train d'engrenages constant et l'arbre de sortie (20) et **en ce qu'**il désaccouple le premier engrenage (K1-1) du premier train d'engrenages constant de l'arbre de sortie (20), et **en ce que** le sixième élément d'accouplement de synchronisation (S2/3) établit l'accouplement entre le premier engrenage (2-1) de la 2ème vitesse et l'arbre d'entrée (10), **en ce que** lors de l'engagement de la 5ème vitesse le sixième élément d'accouplement de synchronisation (S2/3) établit l'accouplement entre le premier engrenage (3-1) de la 3ème vitesse et l'arbre d'entrée (10) et **en ce que** lors de l'engagement de la 6ème vitesse le deuxième élément d'accouplement de synchronisation (S3/K2) établit l'accouplement entre le premier engrenage (K2-1) du deuxième train d'engrenages constant (K2) et l'arbre d'entrée (10), da façon à ce que leur rotation soit couplée, par l'intermédiaire du premier engrenage (K2-1) du deuxième train d'engrenages constant (K2), directement avec l'arbre de sortie (20).
